## Europäisches Patentamt
## European Patent Office
## Office européen des brevets

(19)

(11) Veröffentlichungsnummer: **0 091 173**
**B1**

(12)

# EUROPÄISCHE PATENTSCHRIFT

(45) Veröffentlichungstag der Patentschrift:
31.07.85

(21) Anmeldenummer: 83200469.1

(22) Anmeldetag: 05.04.83

(51) Int. Cl.⁴: **C 03 B 37/025**

(54) Verfahren zum Herstellen optischer Fasern.

(30) Priorität: 06.04.82 NL 8201453

(43) Veröffentlichungstag der Anmeldung:
12.10.83 Patentblatt 83/41

(45) Bekanntmachung des Hinweises auf die Patenterteilung:
31.07.85 Patentblatt 85/31

(84) Benannte Vertragsstaaten:
AT BE DE FR GB SE

(56) Entgegenhaltungen:
FR - A - 2 284 572
FR - A - 2 362 410
GB - A - 2 067 182
GB - A - 2 084 988

(73) Patentinhaber: N.V. Philips' Gloeilampenfabrieken,
Groenewoudseweg 1, NL-5621 BA Eindhoven (NL)

(72) Erfinder: Auwerda, Cornelis Petrus, c/o
INT.OCTROOIBUREAU B.V. Prof. Holstlaan 6,
NL-5656 AA Eindhoven (NL)
Erfinder: Koel, Gerrit Jan, c/o INT.OCTROOIBUREAU
B.V. Prof. Holstlaan 6, NL-5656 AA Eindhoven (NL)

(74) Vertreter: Auwerda, Cornelis Petrus et al,
INTERNATIONAAL OCTROOIBUREAU B.V. Prof.
Holstlaan 6, NL-5656 AA Eindhoven (NL)

BUNDESDRUCKEREI BERLIN

**Beschreibung**

Die Erfindung bezieht sich auf ein Verfahren zum Herstellen optischer Fasern, bei dem die Innenwand eines Rohres mit einer Fluorverbindung geätzt wird und auf der geätzten Innenwand aus einer Gasphase durch eine chemische Reaktion, zu deren Anregung ein nichtisothermes Plasma angewendet wird, Kernglas abgeschieden wird, wonach das Rohr kollabiert und zu einer Faser ausgezogen wird.

In diesem Zusammenhang ist unter Kernglas dasjenige Glas zu verstehen, das auf der Innenwand des Rohres abgeschieden wird. Darunter sind also auch derartige aus der Gasphase abgeschiedene Schichten zu verstehen, die als Anpassungsschichten bezeichnet werden können und die als solche im optischen Sinne nicht zum Kern der Faser gehören. Unter dem Kern einer Faser ist derjenige Teil der optischen Faser zu verstehen, in dem die Brechzahl gegenüber der eines diesen Teil umgebenden Teils der Faser sprunghaft (stepped index) oder allmählich (gradient index) ansteigt.

Unter einem chemischen Abscheidungsverfahren unter Anwendung eines nichtisothermen Plasmas ist ein Verfahren zu verstehen, bei dem ein kaltes Plasma in einem Rohr hin und her bewegt wird, während durch das Rohr Sauerstoff und Siliziumtetrachlorid hindurchgeleitet werden. Dem Gasgemisch kann ein Dotierungsmittel hinzugefügt werden, das die Brechzahl des abgeschiedenen Glases erhöht bzw. verringert. Der Gasdruck im Rohr ist kleiner als 150 mbar und liegt vorzugsweise zwischen 1 und 30 mbar. Das Glasrohr wird während der Abscheidung auf eine Temperatur zwischen 1000 und 1200°C erhitzt. Bei dieser Temperatur tritt bei den angewandten Drucken noch keine thermischer Reaktion auf, die zur Glasrußbildung in der Gasphase führen könnte. Durch die Erhitzung wird jedoch vermieden, daß Chlor in die abgeschiedenen Glasschichten eingebaut wird. Eingebautes Chlor kann nämlich beim Kollabieren und beim Ziehen von Fasern aus dem beim Kollabieren gebildeten Vorformling das Auftreten von Gasblasen veranlassen. Durch die Erhitzung während der Abscheidung wird zugleich eine Rußbildung in den abgeschiedenen Schichten während der Kollabierstufe vermieden.

Es ist üblich, bei der Herstellung optischer Glasfasern das als Substrat wirksame Glas- bzw. Quarzrohr auf der Innenseite sehr gut zu reinigen. Ein bekanntes Verfahren umfaßt Spülen mit einer Fluorwasserstofflösung, wobei ein Teil der Oberfläche bis zu einer geringen Tiefe weggeätzt wird. Nach dieser Ätzbehandlung muß längere Zeit mit Wasser gespült und danach getrocknet werden.

Die Erfindung hat nun die Aufgabe, ein Ätzverfahren unter Verwendung einer Fluorverbindung zu schaffen, wobei das umständliche Spülen und Trocknen vermieden werden kann.

Bei der Herstellung optischer Fasern unter Verwendung einer entlang des Rohres hin- und herbewegten Erhitzungsquelle zum Anregen der Reaktion ist es bereits bekannt, unter Verwendung dieser Erhitzungsquelle in dem Rohr aus einer oder mehreren Kohlenwasserstoffverbindungen, die Fluor und Wasserstoff enthalten, Fluorwasserstoff zu bilden (deutsche Patentschrift 3 000 954). Gasförmiger Fluorwasserstoff (HF) hat eine stark ätzende Wirkung, es müssen also besondere Maßnahmen getroffen werden, um zu vermeiden, daß freier Fluorwasserstoff in die Atmosphäre gelangt.

Bei Anwendung eines nichtisothermen Plasmaabscheidungsverfahrens für das Kernglas ist das bekannte Verfahren nicht anwendbar, weil das Rohr bei diesem Verfahren über die ganze Länge auf eine Temperatur erhitzt wird, bei der aus den in der deutschen Patentschrift 3 000 954 genannten Gasen freier HF entsteht. Bei dem nichtisothermen Plasmaabscheidungsverfahren wird durch Vakuumpumpen ein niedriger Druck aufrechterhalten. HF, der die Pumpen erreichen würde, könnte auf das einwandfreie Funktionieren derselben äußerst schädlich wirken.

Nach der Erfindung wird die Innenwand des Rohres dadurch geätzt, daß eine wasserstofffreie Fluorverbindung durch das Rohr hindurchgeleitet und nichtisothermes Plasma in dem Rohr hin- und herbewegt wird.

Dazu geeignete Verbindungen sind beispielsweise $F_2$, $OF_2$ und gasförmige und flüssige, in Dampfform zu bringende Fluorverbindungen, wie beispielsweise $CF_4$ und $C_2F_6$. Fluorkohlenstoffverbindungen werden, vorzugsweise mit Sauerstoff vermischt, verwendet, um zu vermeiden, daß freier Kohlenstoff gebildet wird oder Polymerisation auftritt.

Es hat sich herausgestellt, daß unter dem Einfluß eines nichtisothermen Plasmas eine Ätzung der Rohrwand erfolgt, und zwar unter Bildung von $SiF_4$ und gegebenenfalls von flüchtigen Fluorverbindungen und Verunreinigungen, die sich in oder auf der Wand des Glasrohres befindet.

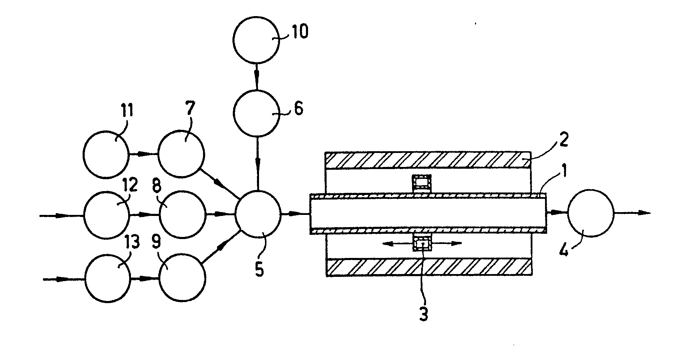

An Hand der Zeichnung, deren einzige Figur ein Diagramm einer Vorrichtung zum Reinigen und innerlichen Bedecken eines Rohres, das zu einem massiven Vorformling kollabiert werden kann, wonach der Vorformling zu einer Faser ausgezogen werden kann, zeigt, wird die Erfindung näher erläutert.

Die Zeichnung zeigt ein Diagramm einer Vorrichtung zum innerlichen Bedecken eines Rohres 1, beispielsweise aus Quarzglas, mit einer lichten Weite von 6 mm, mit Glasschichten. Das Rohr 1 befindet sich in einem Ofen 2. Beim Anbringen der Glasschichten wird im Ofen eine Temperatur von 1150°C beibehalten. Die Glasschichten werden dadurch angebracht, daß ein Gemisch aus Sauerstoff und $SiCl_4$ und dem erforderlichen Dotierungsmittel durch das Rohr hindurchgeleitet und ein Mikrowellenresonator 3 entlang dem Rohr hin- und herbewegt wird. Ein Druck von 25 mbar wird durch eine Vakuumpumpe 4 aufrechterhalten. Bevor mit dem eigentlichen Abscheidungsverfahren angefangen wird, wird aus einem Behälter 10 über eine Regelvorrichtung 6 Hexafluoräthan ($C_2F_6$) und Sauerstoff aus einem Behälter 11 über eine Regelvorrichtung 7 einer Gasmischvorrichtung 5 zugeleitet und von dort in das Rohr hineingeleitet. Das Verhältnis $C_2F_6 : O_2$ beträgt vorzugsweise höchstens 1 : 2, so daß die ganze freigewordene Kohlenstoffmenge mindestens in $CO_2$ umgewandelt werden kann. Der Resonator wird am Rohr hin- und herbewegt, und zwar mit einer Geschwindigkeit von 3 m/Minute, während ein elektrisches Feld mit einer Frequenz von 2,45 GHz und mit einer Energie von 200 W in das Rohr eingekoppelt wird. Der Druck im Rohr wird bei 25 mbar gehalten, kann aber in dieser Phase auch höher sein, sofern dadurch der nichtisotherme Charakter des Plasmas nicht in isotherm geändert wird. Dies ist meistens bei einem Druck über 150 mbar der Fall. Dann besteht nämlich die Gefahr, daß in der Gasphase über die Reaktion $SiF_4 + O_2$ pulveriges $SiO_2$ gebildet wird. Unter dem Einfluß des Plasmas entstehen aus dem $C_2F_6$ u. a. Fluorionen, die auf wirksame Weise unter Bildung von $SiF_4$ eine Ätzung der Rohrwand an der Stelle des Plasmas herbeiführen. Das gebildete $SiF_4$ wird zusammen mit Sauerstoff und gegebenenfalls nicht umgewandeltem $C_2F_6$ und $CO_2$ und gegebenenfalls anderen gasförmigen Reaktionsprodukten über die Pumpe 4 abgeleitet. Die Ätzphase wird vorzugsweise während der Aufheizung des Ofens durchgeführt, was beispielsweise eine Viertelstunde beanspruchen kann. Nachdem die gewünschte Temperatur erreicht ist, wird das Hindurchleiten der Fluorverbindung beendet und es wird auf übliche Weise mit dem Abscheiden der Glasschichten angefangen. Dazu wird durch einen Behälter 12, in dem sich $SiCl_4$ befindet, Sauerstoff hindurchgeleitet und über eine Regelvorrichtung 8 der Gasmischvorrichtung 5 zugeleitet, in der eine Mischung mit Sauerstoff und/oder einem Dotierungsmittel, das aus einem Behälter 13 über eine Regelvorrichtung 9 der Mischvorrichtung zugeleitet wird, erfolgt, wie dies beispielsweise in der europäischen Patentanmeldung 0 023 066 und in der US-Patentschrift 4 314 833 beschrieben ist, deren Inhalt, sofern notwendig, als hierin einbegriffen betrachtet wird. Nachdem eine ausreichende Anzahl Schichten angebracht ist, wird das Rohr auf übliche Weise kollabiert und zu einer optischen Faser ausgezogen.

Das erfindungsgemäße Verfahren bietet den Vorteil, daß das Ätzen ohne Wasserstoff erfolgt, so daß keine Gefahr besteht, daß Wasserstoff, beispielsweise in Form von Hydroxyl (-OH)-Gruppen, auf irgendeine Art und Weise in das Material der Rohrwand aufgenommen wird.

Ein weiterer Vorteil ist, daß jedes Gemisch geeigneter Gase verwendbar ist.

Ein anderer Vorteil ist, daß bereits bei Raumtemperatur mit dem Ätzen angefangen werden kann, während das Ätzen fortgesetzt werden kann, bis das Rohr über die ganze Länge auf die zum Abscheiden des Kernglasmaterial gewünschte Temperatur gebracht ist. Dadurch wird eine wesentliche Verkürzung der Fertigungszeit erzielt, da die bisherigen einzelnen Schritte, Spülen mit Fluorwasserstofflösung, Spülen mit Wasser und Trocknen, vermieden werden.

Beim erfindungsgemäßen Verfahren wird das Rohrinnere auf äußerst wirksame Weise geätzt und poliert, was zu einer einwandfreien Qualität der optischen Faser führt.

**Patentansprüche**

1. Verfahren zum Herstellen optischer Fasern, bei dem die Innenwand eines Rohres mit einer Fluorverbindung geätzt wird und auf der geätzten Innenwand aus einer Gasphase durch eine chemische Reaktion, zu deren Anregung ein nichtisothermes Plasma angewendet wird, Kernglas abgeschieden wird, wonach das Rohr kollabiert und zu einer Faser ausgezogen wird, dadurch gekennzeichnet, daß die Innenwand des Rohres dadurch geätzt wird, daß durch das Rohr eine wasserstofffreie Fluorverbindung hindurchgeleitet und ein nichtisothermes Plasma in dem Rohr hin- und herbewegt wird.

2. Verfahren nach Anspruch 1, dadurch gekennzeichnet, daß durch das Rohr eine gasförmige wasserstofffreie Fluorkohlenstoffverbindung hindurchgeleitet wird.

3. Verfahren nach Anspruch 1, dadurch gekennzeichnet, daß durch das Rohr Hexafluoräthan hindurchgeleitet wird.

4. Verfahren nach Anspruch 1, dadurch gekennzeichnet, daß durch das Rohr ein Gemisch aus Sauerstoff und einer wasserstofffreien Fluorverbindung hindurchgeleitet wird.

5. Verfahren nach Anspruch 1, dadurch gekennzeichnet, daß durch das Rohr ein Gemisch aus einer gasförmigen wasserstofffreien Fluorkohlenstoffverbindung und Sauerstoff hindurchgeleitet wird.

6. Verfahren nach Anspruch 5, dadurch gekennzeichnet, daß durch das Rohr ein Gemisch aus Sauerstoff und Hexafluoräthan hindurchgeleitet wird.

**Claims**

1. A method of manufacturing optical fibres by etching the inner wall of a tube with a fluorine compound and then chemically depositing core glass on the etched inner wall from the gaseous phase while using a non-isothermal plasma for initiating the reaction, after which the tube is collapsed and drawn to from a fibre, characterized in that the inner wall of the tube is etched by passing a hydrogen-free fluorine compound on the gaseous state through the tube while reciprocating a non-isothermal plasma through the tube.

2. A method as claimed in claim 1, characterized in that a gaseous hydrogen-free fluocarbon compound is passed through the tube.

3. A method as claimed in claim 1, characterized in that hexafluoroethane is passed through the tube.

4. a method as claimed in claim 1, characterized in that a mixture of oxygen and a hydrogen-free fluorine compound is passed through the tube.

5. A method as claimed in claim 1, characterized in that a mixture of a gaseous hydrogen-free fluorocarbon compound and oxygen is passed through the tube.

6. A method as claimed in claim 5, characterized in that a mixture of oxygen and hexafluoroethane is passed through the tube.

**Revendications**

1. Procoédé pour la réalisation de fibres optiques, selon lequel la paroi intérieure d'un tube est soumise à un décapage à l'aide d'un composé de fluor et ensuite du verre de noyau est déposé sur la surface décapée à partir d'une phase gazeuse par une réaction chimique, pour l'excitation de laquelle est utilisé un plasma non isothermique, puis le tube s'effondre, après quoi il est étiré en fibre, caractérisé en ce que la paroi intérieure du tube est décapé du fait qu'un composé de fluor exempt d'hydrogène traverse le tube et un plasma non isothermique est animé de mouvements de va-et-vient dans le tube.

2. Procédé selon la revendication 1, caractérisé en ce que le tube est traversé par un composé de fluorcarbonate gazeux exempt d'hydrogène.

3. Procédé selon la revendication 1, caractérisé en ce que le tube est traversé par de l'hexafluoréthane.

4. Procédé selon la revendication 1, caractérisé en ce que le tube est traversé par un mélange d'oxygène et un composé de fluor exempt d'hydrogène.

5. Procédé selon la revendication 1, caractérisé en ce que le tube est traversé par un mélange d'un composé de fluorcarbonate exempt d'hydrogène gazeux et de l'oxygène.

6. Procédé selon la revendication 5, caractérisé en ce que le tube est traversé par un mélange d'oxygène et d'hexafluoréthane.